# FASCICULE DE BREVET EUROPEEN

(11) **EP 4 207 711 B1**
(45) Date de publication et mention de la délivrance du brevet: **09.07.2025**
(21) Numéro de dépôt: 22216972.4
(22) Date de dépôt: 28.12.2022
(51) Int. Cl.: H04L 67/10, H04L 67/1004, H04L 67/1095

(54) **SYSTÈME DE DISSÉMINATION DE CONTENUS DANS UNE FÉDÉRATION DE RÉSEAUX ; PROCÉDÉ DE DISSÉMINATION ET PRODUIT PROGRAMME D'ORDINATEUR ASSOCIÉS**
SYSTEM ZUR VERBREITUNG VON INHALTEN IN EINER NETZWERKFÖDERATION, VERBREITUNGSVERFAHREN UND COMPUTERPROGRAMMPRODUKT DAFÜR
SYSTEM FOR DISSEMINATING CONTENT IN A NETWORK FEDERATION; DISSEMINATING METHOD AND COMPUTER PROGRAM PRODUCT THEREFOR

(30) Priorité: 30.12.2021 FR 2114679
(43) Date de publication de la demande: 05.07.2023
(73) Titulaire: THALES, 92400 Courbevoie (FR)
(72) Inventeur: MORVAN, Christophe, 92622 GENNEVILLIERS CEDEX (FR); SCHOLLER, Franck, 92622 GENNEVILLIERS CEDEX (FR); REBECCHI, Filippo, 92622 GENNEVILLIERS CEDEX (FR); BOUET, Mathieu, 92622 GENNEVILLIERS CEDEX (FR); MONTENOT, Jean-Marc, 92622 GENNEVILLIERS CEDEX (FR)
(74) Mandataire: Lavoix

(56) Documents cités:
- WO-A2-2013/049079
- US-A1- 2021 271 565

## Description

La présente invention concerne la dissémination de contenus dans une fédération de réseaux.

Pour des usages civils, on connaît le concept de réseau de diffusion de contenu, ou réseau CDN (« Content Delivery Network » en anglais). Il s'agit d'un ensemble de serveurs d'un réseau d'infrastructure, comportant un serveur d'origine et un ensemble de serveurs miroirs, qui sont implantés à des endroits différents du réseau d'infrastructure. Une copie du contenu déposé sur le serveur d'origine est transmise vers un ou plusieurs serveur(s) miroir(s) de manière à être stockée au plus proche des utilisateurs effectifs de ce contenu. Ceci a pour but de limiter les flux sur le réseau d'infrastructure et de réduire la latence entre la demande d'un contenu par un utilisateur et sa réception par cet utilisateur.

Une requête d'accès au contenu, émise par un utilisateur, doit être redirigée vers le serveur miroir sur lequel ce contenu est effectivement recopié. Cette redirection s'appuie sur le mécanisme de routage des requêtes (« Request-Routing ») mis en œuvre par un serveur de nom de domaine - DNS (« Domain Name System ») dédié au réseau CDN. La requête d'accès est transmise au serveur DNS, qui renvoie l'adresse IP du serveur miroir où est stocké le contenu objet de la requête d'accès.

Actuellement, les solutions CDN, comme celle décrite dans le document WO 2013/049079 A2, sont faites pour fonctionner sur des réseaux fixes comme des réseaux d'infrastructure, où les problématiques d'instabilité, de bande passante contrainte, de latence élevée, de configuration spécifique, de nommage, de mobilité des utilisateurs et de priorisation ou de préemption des flux n'existent pas.

Une telle solution CDN n'est par conséquent pas transposable à des usages militaires où l'on rencontre tout ou partie de ces problématiques.

En effet, pour des usages militaires, la dissémination de contenus doit satisfaire un certain nombre de contraintes spécifiques, qui dérivent du fait que les réseaux militaires sont des réseaux fédérées, dont les capacités sont réduites et dont la topologie évolue rapidement au cours du temps et de la situation opérationnelle.

Par exemple, une première contrainte est de respecter la séparation des réseaux en fonction de leur niveau de sécurisation. C'est le concept de réseaux Rouges/Noir de l'OTAN.

Une seconde contrainte est de respecter les besoins d'interopérabilité entre les réseaux fédérés, notamment les besoins d'interopérabilité spécifiés dans l'environnement de mise en réseau des missions fédérées - FMN (« Federated Mission Networking ») de l'OTAN.

Une troisième contrainte est de tenir compte de capacités (notamment une bande passante) qui fluctue avec le temps.

Une quatrième contrainte est de tenir compte de la situation opérationnelle.

Le document US 2021/271565 A1 présente système de gestion de sauvegarde des données d'une application.

Le but de la présente invention est de résoudre ce problème de dissémination de contenus dans le cadre d'un réseau fédéré militaire.

Pour cela l'invention a pour objet un système de dissémination de contenus dans une fédération de réseaux, un procédé de dissémination de contenu, et un produit programme d'ordinateur selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] [Fig 2] La figure 1 est une représentation schématique d'un mode de réalisation d'une fédération de réseau intégrant un système de dissémination de contenus selon l'invention ; et,
[Fig 3] La figure 2 est une représentation sous forme de blocs d'un mode de réalisation du procédé de dissémination de contenus selon l'invention.

La présente invention permet d'optimiser dynamiquement non seulement le positionnement d'un contenu sur une fédération de réseaux comportant une pluralité de serveurs CDN, qui constituent une composante CDN de la fédération de réseaux, mais également le chemin d'acheminement d'une copie d'un contenu d'un serveur d'origine vers un serveur miroir de la composante CDN (et de préférence la sécurisation de ce chemin de recopie et/ou la priorisation du flux lors du transfert du contenu du serveur d'origine vers le serveur miroir), ainsi que, avantageusement, le chemin d'accès permettant à un utilisateur d'accéder à un contenu recopié dans un serveur miroir (et de préférence la sécurisation de ce chemin d'accès à ce contenu et/ou la définition de règles d'accès à ce contenu par l'utilisateur).

### Infrastructure générale

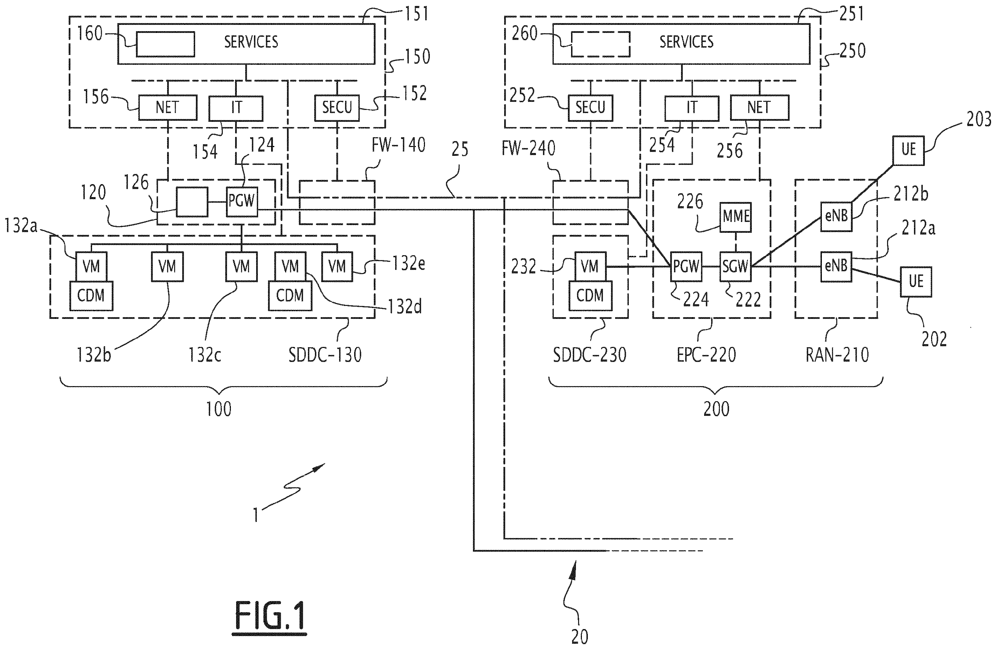

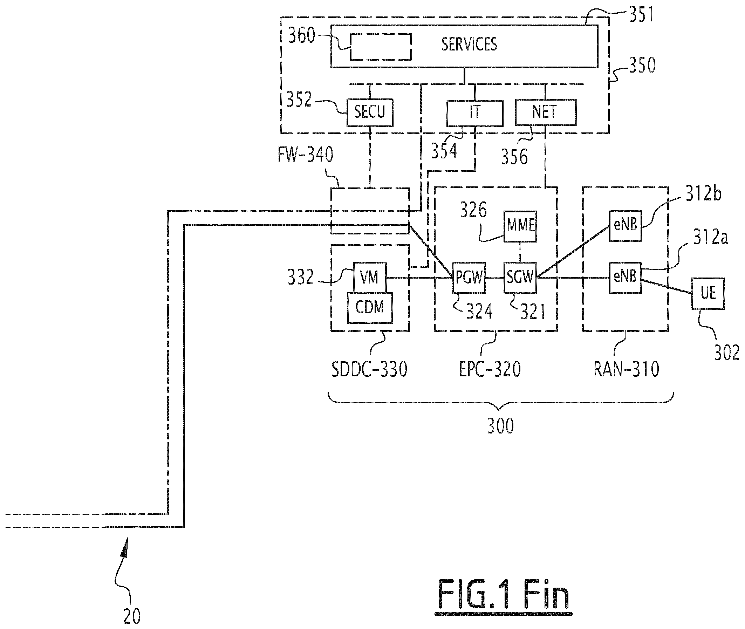

En se référant à la figure 1, une infrastructure 1 comporte un premier réseau 100 d'une part et des second et troisième réseaux 200 et 300 d'autre part, destinés à être fédérés au travers un réseau sous-jacent 20.

Le réseau sous-jacent 20 est un réseau étendu - WAN (« Wide area network » en anglais). Le réseau sous-jacent 20 est met par exemple en œuvre des liaisons satellitaires.

Le premier réseau 100 est de préférence un réseau d'accueil déployé temporairement en arrière du théâtre d'opération. Il comporte par exemple:
- un premier réseau hôte 120, qui comporte une passerelle une passerelle PGW 124 avec le réseau sous-jacent 20, et différents équipements, portant la référence générale 126 sur la figure 1;
- un premier réseau privé constituant un centre de données ou SDDC (« Softwaredefined data center ») 130, qui est un réseau sécurisé comportant un grand nombre de machines virtuelles VM, dont cinq sont représentées sur la figure 1. Elles portent respectivement les références 132a, 132b, 132c, 132c et 132e ;
- un premier pare-feu FW (« Firewall ») 140 constituant une interface entre le premier réseau hôte 120 et le premier SDDC 130, d'une part, et le réseau sous-jacent 20, d'autre part.

Le premier réseau 100 comporte en outre un système d'orchestration 150 comportant une pluralité de contrôleurs et un orchestrateur de services 151 supervisant la pluralité de contrôleurs.

La pluralité de contrôleurs comporte un second contrôleur de réseau 156, un contrôleur de sécurité 152 et un contrôleur de système d'information - IT (« information technology ») 154. Cette répartition est effectuée selon les trois dimensions critiques d'une configuration d'un réseau.

Le contrôleur de réseau 156 contrôle les machines du premier réseau hôte 120 pour les configurer selon des commandes de réseau reçues de l'orchestrateur de services 151. Il s'agit par exemple de paramétrer le routage d'un certain type de flux de données d'un utilisateur identifié pour assurer une certaine bande passante.

Le contrôleur de système d'information - IT 154 contrôle les machines du premier SDDC 130 pour les configurer selon des commandes d'application reçues de l'orchestrateur de services 151. Il s'agit par exemple d'instancier une application particulière en fonction d'un besoin utilisateur identifié, réserver à l'exécution de cette application une certaine ressource mémoire et de calcul d'une VM du premier SDDC 130, éventuellement décommissionner cette application lorsqu'elle n'est plus utilisée ou lorsque la situation opérationnelle le nécessite.

Le contrôleur de sécurité 152 contrôle le premier pare-feu 140, pour le configurer selon des commandes de sécurité reçues de l'orchestrateur de services 151. Il s'agit par exemple de filtrer la circulation des données d'un utilisateur authentifié en fonction de ses privilèges, stockés dans un profil d'abonné de cet utilisateur.

Plus généralement, le premier orchestrateur de services 151 permet, à travers les contrôleurs, l'affectation de ressources physiques et/ou virtuelles disponibles du premier réseau 100 en fonction des besoins des utilisateurs.

Les ressources physiques comprennent par exemple des capacités de calcul du SDDC, des capacités mémoire de travail du SDDC, des capacités de bande passante sur le réseau, des capacités de translation d'adresse réseau (« Network Address Translation - NAT) du pare-feu, etc.

Les ressources virtuelles comprennent par exemple des briques virtualisées correspondant chacune à une application permettant d'effectuer un traitement particulier sur des données spécifiques, tel que par exemple une application d'inspections en profondeur de paquets (« Deep Packet Inspection - DPI ») par le pare-feu, une application de traitement d'images par le SDDC, ou encore une application de compression d'un flux de données par le réseau hôte.

Le second réseau 200 est de préférence un réseau local - LAN (« Local Area Network) constituant un réseau de bordure ou « bulle tactique ». Il est embarqué par exemple dans un second véhicule blindé, les utilisateurs de ce réseau étant des fantassins évoluant sur une seconde zone du théâtre d'opération. Il comporte par exemple:
- un second réseau radio 210, intégrant notamment une pluralité de points d'accès ou eNB (« e-Node B » en 4G) 212. Sur la figure 1 deux eNB sont représentés et référencés 212a et 212b. Un eNB permet à un équipement utilisateur - UE, tel que l'UE 202 ou l'UE 203, de se connecter, au moyen d'une liaison radio, au second réseau 200 ;
- un second réseau hôte 220, ou réseau coeur -EPC (« Evolved Packet Core »). De manière schématique, le second réseau hôte 220 comporte une passerelle SGW221 avec le second réseau radio 210, une passerelle PGW 224 avec le réseau sous-jacent 20, et différents équipements, comme une unité MME (« Mobility Management Entity » ) 226 ;
- un second réseau SDDC 230 qui est un réseau sécurisé comportant un petit nombre de machines virtuelles VM, dont une seule est représentée sur la figure 1. Elle est référencée par le chiffre 232 ;
- un second pare-feu FW 240 constituant une interface entre le second réseau hôte 220 et le second SDDC 230, d'une part, et le réseau sous-jacent 20, d'autre part.

Le second réseau 200 comporte en outre un second système d'orchestration 250 comportant une pluralité de contrôleurs et un second orchestrateur de services 251 supervisant la pluralité de contrôleurs.

La pluralité de contrôleurs comporte un second contrôleur de réseau 256, un second contrôleur de sécurité 252 et un second contrôleur de système d'information - IT 254.

Le second système d'orchestration 250 est similaire au premier système d'orchestration 150.

De manière similaire, le troisième réseau 300 est de préférence un réseau local - LAN (« Local Area Network) constituant un réseau de bordure ou « bulle tactique ». Il est embarqué par exemple dans un second véhicule blindé, les utilisateurs de ce réseau local étant des fantassins évoluant sur une seconde zone du théâtre d'opération. Il comporte par exemple:
- un troisième réseau radio 310, intégrant notamment une pluralité de points d'accès ou eNB (« e-Node B » en 4G) 312. Sur la figure 1 deux eNB sont représentés et référencés 312a et 312b. Un eNB permet à un équipement utilisateur - UE, tel que l'UE 302 au moyen d'une liaison radio, au troisième réseau 300 ;
- un troisième réseau hôte 320, ou réseau coeur -EPC (« Evolved Packet Core »). De manière schématique, le troisième réseau hôte 320 comporte une passerelle SGW 321 avec le troisième réseau radio 310, une passerelle PGW 324 avec le réseau sous-jacent 20, et différents équipements, comme une unité MME (« Mobility Management Entity » ) 326 ;
- un troisième réseau SDDC 330 qui est un réseau sécurisé comportant un petit nombre de machines virtuelles VM, dont une seule est représentée sur la figure 1. Elle est référencée par le chiffre 332 ;
- un troisième pare-feu FW 340 constituant une interface entre le troisième réseau hôte 320 et le troisième SDDC 230, d'une part, et le réseau sous-jacent 20, d'autre part.

Le troisième réseau 200 comporte en outre un troisième système d'orchestration 350 comportant une troisième pluralité de contrôleurs et un troisième orchestrateur de services 351 supervisant la troisième pluralité de contrôleurs.

La troisième pluralité de contrôleurs comporte un troisième contrôleur de réseau 356, un troisième contrôleur de sécurité 352 et un troisième contrôleur IT 354. Cette répartition est effectuée selon les trois dimensions critiques d'une configuration d'un réseau.

Le troisième système d'orchestration 350 est similaire au premier et second systèmes d'orchestration 150 et 250.

Dans un réseau fédéré, l'un des systèmes d'orchestration joue le rôle de maître et le ou les autres celui d'esclave. Ceci relève du fonctionnement d'un réseau fédéré et est hors du périmètre de la présente invention. En particulier, la manière de choisir le système d'orchestration maître est hors de la portée du présent document.

Le système d'orchestration maître est en communication avec les systèmes d'orchestration esclaves pour obtenir des informations sur les réseaux contrôlés par ces derniers et demander à ces systèmes d'orchestration esclave de configurer les réseaux qu'ils contrôlent. Ainsi, le système d'orchestration maître est propre à déterminer la configuration que doit adopter la fédération de réseaux à chaque instant et est propre à déployer cette configuration dans la fédération de réseaux soit directement soit au travers des systèmes d'orchestration esclaves.

Dans ce qui suit, la présence de ces systèmes d'orchestration esclaves est omise pour simplifier la description et l'on se concentre sur le système d'orchestration maître.

Dans ce qui suit le système d'orchestration 150 joue le rôle de système d'orchestration maître.

### Système selon l'invention

Le système de dissémination de contenu selon l'invention comporte une pluralité de serveurs CDN (« Content Delivery Network »).

La pluralité de serveurs CDN est constituée de serveurs du réseau fédérés.

La pluralité de serveurs CDN constituent ensemble un réseau CDN fédéré.

Les serveurs CDN sont par exemple des VM du réseau fédéré.

Par exemple sur la figure 1, le réseau CDN fédéré comporte les VM 132a et 132d du premier réseau 100, la VM 232 du second réseau 200, et la VM 332 du troisième réseau 300.

Puisqu'il s'agit ici d'un mode de réalisation impliquant des VM, à un instant de l'utilisation de l'infrastructure 1, une VM peut être configurée pour jouer le rôle de serveur CDN et intégrer le réseau CDN fédéré, ou au contraire une VM peut être déconditionnée pour cesser de jouer le rôle de serveur CDN et quitter le réseau CDN fédéré.

Le système de dissémination de contenu selon l'invention comporte, associé à chaque système d'orchestration, un module de contrôle ou module FMCD (pour module de dissémination de contenu pour mission fédérée ou module - « Federated Mission Content Delivery » en anglais) dans ce qui suit.

Par exemple, le module FMCD d'un système d'orchestration est exécuté par l'orchestrateur de service correspondant. Soit, pour le mode de réalisation représenté sur la figure 1, un premier module FMCD 160 est exécuté par le premier système d'orchestration 151, un second module FMCD 260 est exécuté par le second système d'orchestration 251, et un troisième module FMCD est exécuté par le troisième système d'orchestration 351.

C'est le module FMCD associé au système d'orchestration maître qui est exécuté à l'instant courant pour gérer l'intégralité du service CDN offert par la fédération de réseaux.

Dans la configuration de la figure 1, le premier système d'orchestration 150 est choisi en tant que maître, c'est donc le module FMCD 160 qui est exécuté.

Le module FMCD 160 est en communication avec les autres modules FMCD de la fédération de réseaux pour échanger des informations, comme par exemple des profils d'abonnement.

Le module FMCD 160 est capable de contrôler les différents serveurs CDN de l'infrastructure 1 tout en prenant en compte les besoins des utilisateurs et les contraintes opérationnelles.

Le module FMCD est de préférence standard de sorte que les algorithmes de décision qu'il exécute sont les mêmes quels que soient les réseaux effectivement fédérés. L'ensemble des messages et attendus nécessaires à l'implémentation du réseau CDN fédéré sont également conformes à un format standard. Cela permet de répondre à la contrainte d'interopérabilité du standard FMN de l'OTAN.

Le module FMCD met en œuvre différents algorithmes, notamment un algorithme de positionnement et un algorithme de décision.

Chaque algorithme peut être exécuté à chaque occurrence d'un évènement particulier détecté sur les réseaux fédérés, c'est-à-dire une modification de la valeur d'une variable d'entrée du module FMCD. Ceci permet de calculer des sorties dynamiquement.

Le module FMCD est capable d'exécuter un algorithme de positionnement des serveurs CDN à travers la fédération de réseaux.

L'algorithme de positionnement est par exemple fondé sur un calcul des poids.

Il conduit à un déploiement du service CDN dans la fédération de réseaux afin d'optimiser l'usage de la fédération de réseaux.

Le module FMCD 160 est ainsi capable de déterminer le ou les VM (et plus généralement toute machine) éligibles en tant que serveurs CDN afin de définir le réseau CDN fédéré à l'instant courant. Pour cela, le module FMCD 160 prend par exemple en compte :
- la localisation des abonnés,
- les capacités de chaque VM (en termes de capacités de calcul - CPU, de mémoire, etc.), et/ou,
- la criticité de chaque VM en fonction de la situation opérationnelle (celle-ci étant par exemple connue du système d'orchestration maître par une saisie d'informations adaptées par un opérateur de pilotage du système d'orchestration (« Floor control »).

Le module FMCD est capable d'identifier le meilleur serveur CDN miroir pour le stockage d'un contenu particulier déposé sur un serveur CDN origine du réseau CDN fédéré. Pour cela, le module FMCD 160 prend par exemple en compte :
- des ressources disponibles sur les serveurs CDN du réseau CDN fédéré (capacité de stockage, nombre d'accès, etc.) permettant d'héberger un contenu, et/ou,
- des capacités réseau disponibles permettant l'acheminement d'un contenu depuis le serveur CDN origine vers un serveur CDN miroir potentiel, sachant que le système d'orchestration maître a la connaissance de l'ensemble des flux associés à chacun des niveaux de sécurité circulant sur la fédération de réseau.

Le module FMCD est capable d'identifier une route optimale (ou chemin d'acheminement) pour la réplication d'un contenu du serveur CDN origine vers un serveur CDN miroir sélectionné. Pour cela, le module FMCD 160 prend par exemple en compte :
- des risques opérationnels pouvant dégradé le service d'acheminement de manière à garantir la continuité de la réplication (comme une bande passante disponible sur les liens entre les équipements de la fédération de réseaux, une disponibilité des équipements de la fédération de réseaux, etc.), et/ou,
- de critère de sécurité (disponibilité, intégrité, confidentialité) de manière à déterminer la route la plus sûre limitant par exemple les attaques de type attaque par déni de service - DDoS (« distributed denial of service attack »).

Dans un mode de réalisation particulièrement avantageux, le module FMCD est propre à coopérer avec des modules de pare-feu FW 140, 240, 340 évolués, tels que par exemple conformes au module d'allocation dynamique d'identité réseau - MADIR décrit dans la demande de brevet FR 20 09408.

Il s'agit d'un module de contrôle d'accès adapté pour contrôler l'accès des utilisateurs aux ressources du réseau. Un tel module comporte par exemple, outre un pare feu, un Proxy DNS, un DNS ( « Domain Name System »), un module d'autorisation et d'authentification - AAA, un bloc de contrôle, et un bloc réseau cyber défense de type NMCD (« Network Management Cyber Defense »), de préférence conforme au standard FMN de l'OTAN.

Le module FMCD 160 a alors de préférence deux interfaces avec chacun des modules de pare-feu de la fédération de réseau :
- une première interface pour fournir la liste des résolutions de noms des serveurs CDN déployés pour une liste d'utilisateurs autorisés ;
- une seconde interface pour fournir des routes spécifiques entre un serveur CDN déployé particulier et chaque abonné concerné.

Le module FMCD est alors capable de contrôler l'accès de chaque utilisateur à un contenu.

Ceci est réalisé au moyen du MADIR. Le module FMCD vient ajouter au module MADIR une liste de résolutions de noms par utilisateur.

Pour cela, le module FMCD 160 prend par exemple en compte un profil d'abonné (abonnement signé, droit d'accès, priorisation, etc.) de chaque utilisateur afin de proposer un accès contrôlé à chaque utilisateur.

Le module FMCD est également capable d'identifier une route d'accès sécurisée (ou chemin d'accès) permettant d'accéder à un contenu hébergé par un serveur CDN miroir pour chaque utilisateur. Les routes d'accès sécurisées diffèrent d'un utilisateur à l'autre par exemple en fonction du niveau de sûreté de la route, du type d'informations à faire circuler le long de la route, du coût de l'utilisation de la route, etc.

Ceci est réalisé au travers du MADIR. Le module FMCD vient ajouter au module MADIR une liste de routes par utilisateur.

Pour cela, le module FMCD 160 prend par exemple en compte le profil d'abonné (abonnement signé, droit d'accès, priorisation, etc.) et le serveur CDN hébergeant le contenu, mais également :
- des capacités réseau disponibles permettant à un utilisateur d'accéder au serveur CDN miroir stockant le contenu, sachant que le système d'orchestration maître a la connaissance de l'ensemble des flux associés à chaque niveau de sécurité circulant sur la fédération de réseaux, et/ou
- des risques opérationnels risquant d'interrompre l'accès par un utilisateur au contenu stocké dans le serveur CDN.

Un module FMCD, comme le module 160, sauvegarde par conséquent un profil d'abonné pour chaque utilisateur autorisé à accéder à des contenus sur la fédération de réseaux. Avantageusement, à un instant donné, un module FMCD ne stocke que les profils des utilisateurs effectivement connectés au réseau correspondant. Ceci est en particulier vrai pour les réseaux de bordure. Un module FMCD peut demander les informations nécessaires au module FMCD du système d'orchestration maître pour mettre à jour les profils d'utilisateur qu'il mémorise. Le système d'orchestration maître peut être adossé à un système BSS (« Business Support System ») regroupant l'ensemble des profils d'abonnés des utilisateurs autorisé à se connecter à la fédération de réseaux.

### Procédé de fonctionnement

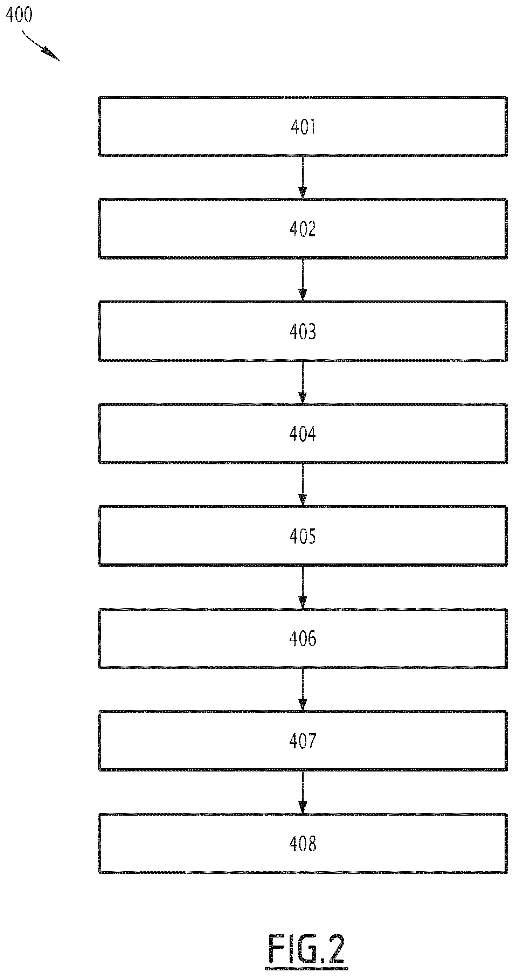

Comme illustré sur la figure 2, la mise en œuvre du procédé 400 permet de fournir un service CDN sur la fédération de réseau résultant de l'association des premier, second et troisième réseaux 100, 200 et 300.

Le système d'orchestration 150 est par exemple choisi en tant que système d'orchestration maître de la fédération de réseaux.

A chaque instant d'exécution du procédé 400, différentes métriques relatives à la dimension réseau, à la dimension IT et à la dimension sécurité sont disponibles au niveau de chaque système d'orchestration local 150, 250 et 350 de chaque réseau 100, 200 et 300. Ces métriques sont rapatriées vers le système d'orchestration maître, qui dispose par conséquent d'une vision de l'ensemble de la fédération de réseaux.

De préférence, un opérateur de pilotage peut renseigner une données d'entrée descriptive de la situation opérationnelle. En variante, ce sont des capteurs ou des dispositifs déployés sur le terrain qui permettent de définir la situation opérationnelle courante.

Dans l'étape 401, le système d'orchestration 150 exécute l'algorithme de positionnement du module FMCD 160 de manière à déterminer le ou les VM (et plus généralement toute machine) éligibles en tant que serveurs CDN afin de définir le réseau CDN fédéré à l'instant courant.

Le réseau CDN défini regroupe un ensemble de VMs pouvant jouer le rôle de serveur CDN à l'instant donné. Il est par exemple composé des VM 132a et 132d du premier réseau 100, de la VM 232 du second réseau 200 et de la VM 332 du troisième réseau 300.

Les étapes suivantes du procédé 400 correspondent à la dissémination d'un contenu dans le réseau CDN fédéré précédemment défini.

Dans une étape 402, un éditeur de contenu dépose un fichier de contenu sur un serveur CDN, qui constitue par conséquent le serveur CDN d'origine. Par exemple, le serveur CDN d'origine est le serveur CDN le plus proche du point d'accès de l'éditeur à la fédération de réseaux. Par exemple, l'utilisateur de l'UE 302 dépose un contenu du type image sur le serveur CDN 332. Le serveur CDN d'origine 332 informe le système d'orchestration local 350 dont il dépend qu'un nouveau contenu a été déposé et le type de ce contenu. Cette information est retransmise au système d'orchestration maître 150.

Dans une troisième étape 403, le module FMCD 160 du système d'orchestration 150 identifie les serveurs CDN du réseau CDN fédéré qui constituent des serveurs CDN miroirs candidats pour le contenu. Une liste des serveurs CDN miroirs candidats est produite.

Dans une quatrième étape 404, le module FMCD 160 du système d'orchestration maître 150, sur la base des métriques et de la liste des serveurs CDN miroirs candidats, détermine une liste de serveurs CDN miroirs aptes à recevoir une copie du fichier de contenu. Avantageusement, cette détermination se fait en fonction de la capacité du réseau à acheminer le fichier de contenu du serveur CDN d'origine vers un serveur CDN miroir candidat, par exemple en réalisant un pré calcul de route vers chacun des serveurs CDN miroirs candidats.

Une allocation est calculée par rapport aux différents serveurs CDN miroirs candidats et, pour chaque CDN miroir candidat, le nombre d'utilisateurs abonnés au plus proche.

Une allocation prend par exemple la forme d'un vecteur associé au contenu qui indique si oui ou non un serveur CDN miroir candidat doit être considéré comme un serveur CDN miroir pour ce contenu.

La problème est celui dit du « sac à dos » (« knapsac »). On connait différents algorithmes permettant de répondre à ce problème avec des solutions optimales. Les poids sont des valeurs d'entrée du problème, et la sortie est une allocation.

Les poids qui représentent l'état de chaque serveur CDN miroir candidat (disque, CPU pour l'encodage du fichier de contenu, et/ou charge réseau).

On connait par ailleurs si un utilisateur est intéressé par le type du contenu venant d'être déposé par exemple à partir du profil d'abonné de cet utilisateur.

A l'issue de l'étape 404, est ainsi déterminée la liste des serveurs CDN miroirs vers lesquels envoyer une copie du contenu.

L'étape 405 suivante consiste à optimiser des chemins d'acheminement du fichier de contenu du serveur CDN d'origine vers chacun des serveurs CDN miroirs.

Le module FMCD 160 du système d'orchestration maître 150 calcule les chemins optimaux entre le serveur CDN d'origine est les serveurs CDN miroirs en prenant en compte des contraintes de sécurité, de bande passante, de disponibilité des noeuds de la fédération de réseaux, etc.

Le calcul de chemin optimal peut être réalisé en mettant en œuvre la procédure de la demande de brevet FR n°20 13990.

En variante, il est envisageable d'optimiser conjointement les serveurs CDN miroirs et les chemins d'acheminement associés, mais ce calcul est plus complexe.

A l'étape 406, le système d'orchestration maître 150 commande les différents contrôleurs pour configurer la fédération de réseaux et préparer des chemins d'acheminement calculés pour l'acheminement du fichier de contenu du serveur CDN d'origine vers les serveurs CDN miroirs.

Puis, dans l'étape 407, le système d'orchestration maître 150 informe le serveur CDN d'origine pour qu'il synchronise le contenu avec les serveurs CDN miroirs distants. Le contenu est alors acheminé vers chacun des serveurs CDN miroirs en empruntant les chemins d'acheminement configurés pour ce faire dans la fédération de réseaux.

Le système d'orchestration maître 150 renseigne également les serveurs DNS de la fédération de réseau pour diriger la requête d'un utilisateur vers le serveur CDN miroir adapté.

Enfin l'étape 408 correspond à l'accès par un utilisateur à un contenu déposé sur un serveur CDN miroir.

Avantageusement, cet accès se fait de manière sécurisée. Par exemple, à l'étape 406, l'orchestrateur maître 150 contrôle un ou des équipements réseaux (type pare feu FW, ou pare feu évolué du type module MADIR, ...) pour mettre en place des règles d'accès par utilisateur.

Avantageusement, encore, dans l'étape 405, le module FMCD 160 calcule un chemin d'accès pour chaque utilisateur au contenu déposé sur un serveur CDN miroir particulier. La sortie de ce calcul peut prendre la forme d'un vecteur comportant différents attributs, comme par exemple : l'adresse IP du serveur CDN miroir cible stockant le contenu, la définition de plusieurs chemins d'accès à travers la fédération de réseaux permettant d'accéder au serveur CDN miroir cible, chaque chemin étant fonction d'un profil d'abonné d'utilisateur. Alors, à l'étape 406, l'orchestrateur maître 150 contrôle un ou des équipements réseaux pour configurer la fédération de réseaux et préparer les chemins d'accès calculés pour l'acheminement du fichier de contenu du serveur CDN miroir vers un utilisateur.

### Variantes et Avantages

En variante, le profil d'abonné d'un utilisateur comporte une liste des types de contenu qui intéressent cet utilisateur. Lorsqu'un nouveau contenu est déposé sur le réseau CDN fédéré, le serveur d'orchestration maître 150 est capable d'émettre une notification vers chacun des utilisateurs dont le profil d'abonné indique qu'il est intéressé par ce type de contenu. Cette notification comporte par exemple un lien pointant directement vers le serveur CDN miroir adapté pour cet utilisateur.

Ainsi, le module FMCD 160 est exécuté pour déterminer la manière de déployer le service FMCD sur la fédération de réseaux : positionnement des serveurs CDN, mais également détermination des serveurs miroirs pour un type de contenu déposé sur un serveur d'origine, détermination des chemins d'acheminement des contenus d'un serveur CDN à l'autre, et, avantageusement, définition des règles d'accès des utilisateurs à un type de contenu sur les serveurs CDN miroirs et détermination des chemins d'accès pour chaque type de contenu pour chaque utilisateur.

L'homme du métier constatera que la présente invention permet de répondre aux contraintes associées à un usage militaire d'un service CDN sur un réseau fédéré.

## Revendications

1. Système de dissémination de contenus dans une fédération de réseaux comportant :
- une pluralité de serveurs de contenu (132a, 132d, 232, 332) répartis dans la pluralité de réseaux (100, 200, 300) constitutifs de la fédération de réseaux, chaque serveur de contenu définissant un espace de stockage de contenus en un endroit particulier de la fédération de réseaux ;
- un système d'orchestration maître (150) de la fédération de réseaux, comportant un module de contrôle (160), le module de contrôle permettant d'optimiser, en fonction d'un profil d'abonné d'un utilisateur cherchant à accéder à un contenu particulier, le choix d'un serveur de contenu miroir de la pluralité de serveurs de contenu pour le stockage d'une copie d'un contenu particulier déposé sur une serveur de contenu d'origine de la pluralité de serveurs de contenu, ainsi que le choix d'un chemin d'acheminement sur la fédération de réseaux permettant de transmettre la copie du contenu depuis le serveur d'origine vers le serveur de contenu miroir, ainsi qu'un chemin d'accès permettant à l'utilisateur d'accéder à la copie du contenu particulier déposée sur le serveur miroir choisi
le système d'orchestration maître étant adapté pour informer le serveur de contenu d'origine pour qu'il synchronise le contenu particulier avec le serveur de contenu miroir choisi et à configurer la fédération de réseaux pour que l'acheminement de la copie du contenu particulier s'effectue selon le chemin d'acheminement choisi, de sorte que l'utilisateur accède à la copie du contenu particulier déposée sur le serveur de contenu miroir choisi en se connectant au serveur de contenu miroir choisi par le chemin d'accès choisi.

2. Système selon la revendication 1, dans lequel le module de contrôle (160) est capable de déterminer les équipements de la fédération de réseaux éligibles en tant que serveurs de contenu de la pluralité de serveurs de contenu.

3. Système selon la revendication 1 ou la revendication 2, dans lequel le module de contrôle (160) optimise le choix d'un serveur de contenu miroir en fonction des ressources disponibles sur les serveurs de contenus de la pluralité de serveurs de contenu permettant d'héberger le contenu particulier, et/ou des capacités réseau disponibles permettant l'acheminement du contenu particulier depuis le serveur de contenu d'origine vers un serveur de contenu miroir candidat.

4. Système selon l'une quelconque des revendications 1 à 3, dans lequel le module de contrôle (160) optimise le choix du chemin d'acheminement en fonction de contraintes de sécurité associées au contenu particulier, d'une bande passante disponible sur les liens entre les équipements de la fédération de réseaux, et/ou d'une disponibilité des équipements de la fédération de réseaux.

5. Système selon l'une quelconque des revendications 1 à 4, dans lequel le module de contrôle (160) détermine des règles d'accès à un contenu recopié sur le serveur de contenu miroir choisi pour chaque utilisateur en fonction d'un profil d'abonné de chaque utilisateur.

6. Système selon l'une quelconque des revendications 1 à 5, dans lequel le module de contrôle (160) optimise le choix d'un chemin d'accès à un contenu recopié sur le serveur de contenu miroir choisi pour chaque utilisateur en fonction d'un profil d'abonné de chaque utilisateur.

7. Procédé (400) de dissémination de contenus mis en œuvre dans une fédération de réseaux comportant un système de dissémination de contenus selon l'une quelconques des revendications précédentes, **caractérisé en ce qu'**il comporte les étapes de :
- déposer un contenu particulier sur un serveur de contenu d'origine de la pluralité de serveurs de contenu ;
- optimiser le choix, par le système d'orchestration maître, en fonction d'un profil d'abonné d'un utilisateur cherchant à accéder au contenu particulier, d'un serveur de contenu miroir parmi la pluralité de serveurs de contenu et d'un chemin d'acheminement d'une copie du contenu particulier depuis le serveur de contenu d'origine vers le serveur de contenu miroir choisi, ainsi qu'un chemin d'accès permettant à l'utilisateur d'accéder à la copie du contenu particulier déposée sur le serveur miroir choisi ;
- informer, par le système d'orchestration maître, le serveur de contenu d'origine pour qu'il synchronise le contenu particulier avec le serveur de contenu miroir choisi et configurer, par le système d'orchestration maître, la fédération de réseaux pour que l'acheminement de la copie du contenu particulier s'effectue selon le chemin d'acheminement choisi ; et,
- accéder, par l'utilisateur, à la copie du contenu particulier déposée sur le serveur de contenu miroir choisi par le chemin d'accès choisi.

8. Procédé (400) selon la revendication 7, comportant en outres les étapes de :
- déterminer les équipements de la fédération de réseaux éligibles en tant que serveurs de contenu de la pluralité de serveurs de contenu du système de dissémination de contenus ; et choisir un serveur de contenu miroir parmi la pluralité de serveurs de contenu consiste à :
- identifier les serveurs de contenu qui constituent des serveurs de contenu miroirs candidats pour le contenu particulier ; et,
- déterminer, parmi les serveurs de contenu miroirs candidats, le serveur de contenu miroir apte à recevoir une copie du contenu particulier.

9. Procédé selon la revendication 7 ou la revendication 8, comportant en outre une étape consistant à définir des règles d'accès à la copie du contenu particulier déposée sur le serveur de contenu miroir choisi pour l'utilisateur.

10. Procédé selon l'une quelconque des revendications 7 à 9, comportant en outre une étape consistant à calculer un chemin d'accès à la copie du contenu particulier déposée sur le serveur de contenu miroir choisi pour l'utilisateur.

11. Produit programme d'ordinateur comportant des instructions logicielles qui, lorsqu'elles sont exécutées par un système d'orchestration maître d'un système de dissémination de contenu selon l'une quelconques des revendications 1 à 6, permet de mettre en œuvre certaines des étapes d'un procédé de dissémination de contenus selon l'une quelconque des revendications 7 à 10.

## Patentansprüche

1. System zur Verbreitung von Inhalten in einer Netzwerkföderation, umfassend:
- eine Vielzahl von Inhaltsservern (132a, 132d, 232, 332), die über die Vielzahl von Netzen (100, 200, 300) verteilt sind, die die Netzwerkföderation darstellen, wobei jeder Inhaltsserver einen Speicherplatz für Inhalte an einem jeweiligen Ort in der Netzwerkföderation definiert;
- ein Master-Orchestrierungssystem (150) der Netzwerkföderation, umfassend ein Kontrollmodul (160), wobei das Kontrollmodul es ermöglicht, abhängig von einem Abonnentenprofil eines Nutzers, der auf einen jeweiligen Inhalt zugreifen möchte, die Auswahl eines Spiegel-Inhaltsservers der mehreren Inhaltsserver zum Speichern einer Kopie eines jeweiligen Inhalts, der auf einem Original-Inhaltsserver der Vielzahl von Inhaltsservern abgelegt ist, zu optimieren, sowie die Auswahl eines Weiterleitungspfads durch die Netzwerkföderation, um die Kopie des Inhalts von dem Original-Inhaltsserver zu dem Spiegel-Inhaltsserver zu übertragen, sowie eines Zugriffspfads, um dem Nutzer den Zugriff auf die Kopie des jeweiligen Inhalts zu ermöglichen, die auf dem ausgewählten Spiegel-Server abgelegt ist
wobei das Master-Orchestrierungssystem angepasst ist, um den Original-Inhaltsserver zu informieren, damit er den jeweiligen Inhalt mit dem ausgewählten Spiegel-Inhaltsserver synchronisiert, und die Netzwerkföderation zu konfigurieren, damit die Weiterleitung der Kopie des jeweiligen Inhalts gemäß dem ausgewählten Weiterleitungspfad erfolgt, sodass der Nutzer auf die Kopie des jeweiligen Inhalts zugreift, die auf dem ausgewählten Spiegel-Inhaltsserver abgelegt ist, indem er sich über den ausgewählten Zugriffspfad mit dem ausgewählten Spiegel-Inhaltsserver verbindet.

2. System nach Anspruch 1, wobei das Steuermodul (160) in der Lage ist, die Geräte der Netzwerkföderation zu bestimmen, die als Inhaltsserver der Vielzahl von Inhaltsservern in Frage kommen.

3. System nach Anspruch 1 oder Anspruch 2, wobei das Steuermodul (160) die Auswahl eines Spiegel-Inhaltsservers basierend auf den verfügbaren Ressourcen auf den Inhaltsservern der Vielzahl von Inhaltsservern, die es ermöglichen, den jeweiligen Inhalt zu hosten, und/oder verfügbaren Netzkapazitäten, die das Weiterleiten des jeweiligen Inhalts von dem Original-Inhaltsserver zu einem Kandidaten-Spiegel-Inhaltsserver ermöglichen, optimiert.

4. System nach einem der Ansprüche 1 bis 3, wobei das Steuermodul (160) die Wahl des Weiterleitungspfads abhängig von Sicherheitsbeschränkungen, die mit dem jeweiligen Inhalt assoziiert sind, einer verfügbaren Bandbreite auf den Verbindungen zwischen den Geräten der Netzwerkföderation und/oder einer Verfügbarkeit der Geräte der Netzwerkföderation optimiert.

5. System nach einem der Ansprüche 1 bis 4, wobei das Steuermodul (160) Zugriffsregeln Inhalte bestimmt, die auf den Spiegel-Inhaltsserver zurückkopiert werden, die für jeden Nutzer basierend auf einem Abonnentenprofils von jedem Nutzer ausgewählt werden.

6. System nach einem der Ansprüche 1 bis 5, wobei das Steuermodul (160) die Auswahl eines Zugriffspfads zu einem Inhalt, der auf den Spiegel-Inhaltsserver zurückkopiert wird, optimiert, der für jeden Nutzer basierend auf einem Abonnentenprofil von jedem Nutzer ausgewählt wird.

7. Verfahren (400) zur Verbreitung von Inhalten, das in einer Netzwerkföderation durchgeführt wird, umfassend ein System zur Verbreitung von Inhalten nach einem beliebigen der vorherigen Ansprüche, **dadurch gekennzeichnet, dass** es die folgenden Schritte umfasst:
- Ablegen eines jeweiligen Inhalts auf einem Original-Inhaltsserver aus der Vielzahl von Inhaltsservern;
- Optimieren der Auswahl eines Spiegel-Inhaltsservers aus der Vielzahl von Inhaltsservern durch das Master-Orchestrierungssystem abhängig von einem Abonnentenprofil eines Nutzers, der Zugang zu dem jeweiligen Inhalt sucht, und eines Weiterleitungspfads für eine Kopie des jeweiligen Inhalts von dem Original-Inhaltsserver zu dem ausgewählten Spiegel-Inhaltsserver sowie eines Zugriffspfads, der es dem Nutzer ermöglicht, auf die Kopie des jeweiligen Inhalts zuzugreifen, die auf dem ausgewählten Spiegelserver abgelegt ist;
- Informieren, über das Master-Orchestrierungssystem, des Original-Inhaltsservers, damit er den jeweiligen Inhalt mit dem ausgewählten Spiegel-Inhaltsserver synchronisiert, und Konfigurieren, durch das Master-Orchestrierungssystem, der Netzwerkföderation, damit die Weiterleitung der Kopie des jeweiligen Inhalts über den gewählten Weiterleitungspfad erfolgt; und
- Zugreifen, durch den Nutzer, auf die Kopie des jeweiligen Inhalts, die auf dem gewählten Spiegelserver abgelegt ist, über den gewählten Zugriffspfad.

8. Verfahren (400) nach Anspruch 7, ferner umfassend die folgenden Schritte:
- Bestimmen der Geräte der Netzwerkföderation, die als Inhaltsserver der Vielzahl von Inhaltsservern des Systems zur Verbreitung von Inhalten in Frage kommen; und wobei ein Auswählen eines Spiegel-Inhaltsservers aus der Vielzahl von Inhaltsservern aus Folgendem besteht:
- Identifizieren der Inhaltsserver, die Kandidaten-Spiegel-Inhaltsserver für den jeweiligen Inhalt darstellen; und,
- Bestimmen, aus den Kandidaten-Spiegel-Inhaltsserver jenen Spiegel-Inhaltsserver bestimmen, der geeignet ist, um eine Kopie des jeweiligen Inhalts zu empfangen.

9. Verfahren nach Anspruch 7 oder Anspruch 8, ferner umfassend einen Schritt, der daraus besteht, Zugriffsregeln auf die Kopie des jeweiligen Inhalts zu definieren, die auf dem für den Nutzer ausgewählten Spiegel-Inhaltsserver abgelegt ist.

10. Verfahren nach einem der Ansprüche 7 bis 9, ferner umfassend einen Schritt, der daraus besteht, einen Zugriffspfad zu der Kopie des jeweiligen Inhalts zu berechnen, der auf dem für den Nutzer gewählten Spiegel-Inhaltsserver abgelegt ist.

11. Computerprogrammprodukt, umfassend Softwareanweisungen, die, wenn sie von einem Master-Orchestrierungssystem eines Systems zur Verbreitung von Inhalten nach einem der Ansprüche 1 bis 6 ausgeführt werden, die Durchführung gewisser der Schritte eines Systems zur Verbreitung von Inhalten nach einem der Ansprüche 7 bis 10 ermöglichen.

## Claims

1. A system for disseminating content in a network federation, including:
- a plurality of content servers (132a, 132d, 232, 332) distributed in the plurality of networks (100, 200, 300) making up the network federation, each content server defining a content storage space in one particular location of the network federation;
- a master orchestration system (150) of the network federation, comprising a control module (160), the control module making it possible to optimize, based on a subscriber profile of a user seeking to access a particular content, the choice of a mirror content server of the plurality of content servers for the storage of a copy of a particular content deposited on an original content server of the plurality of content servers, as well as the choice of an optimal routing path on the network federation allowing the copy of the content to be transmitted from the original server to the mirror content server, as well as an access path allowing the user to access the copy of the particular content deposited on the chosen mirror server,
the master orchestration system being adapted to inform the original content server to synchronize the particular content with the chosen mirror content server and to configure the network federation so that the routing of the copy of the particular content is performed along the chosen routing path, such that the user accesses the copy of the particular content deposited on the chosen mirror content server by connecting to the chosen mirror content server by the chosen access path.

2. The system according to claim 1, wherein the control module (160) is able to determine the network federation equipment eligible as content servers of the plurality of content servers.

3. The system according to claim 1 or claim 2, wherein the control module (160) optimizes the choice of a mirror content server based on the resources available on the content servers of the plurality of content servers for hosting the particular content, and/or the available network capabilities allowing the particular content to be routed from the original content server to a candidate mirror content server.

4. The system according to any one of claims 1 to 3, wherein the control module (160) optimizes the choice of the routing path based on security constraints associated with the particular content, available bandwidth on the links between the equipment items of the network federation, and/or availability of the equipment items of the network federation.

5. The system according to any one of claims 1 to 4, wherein the control module (160) determines access rules to content copied to the chosen mirror content server for each user based on a subscriber profile of each user.

6. The system according to any one of claims 1 to 5, wherein the control module (160) optimizes the choice of an access path to a content copied to the chosen mirror content server for each user based on a subscriber profile of each user.

7. A method (400) for disseminating content implemented in a network federation including a content dissemination system according to any one of the preceding claims, **characterized in that** it includes the steps of:
- depositing a particular content on an original content server of the plurality of content servers;
- optimizing the choice, by the master orchestration system, based on a subscriber profile of a user seeking to access the particular content, of a mirror content server among the plurality of content servers and a routing path of a copy of the particular content from the original content server to the chosen mirror content server, as well as an access path allowing the user to access the copy of the particular content deposited on the chosen mirror server;
- informing, by the master orchestration system, the original content server to synchronize the particular content with the chosen mirror content server and configuring, by the master orchestration system, the network federation so that the routing of the copy of the particular content is carried out according to the chosen routing path; and
- accessing, by the user, the copy of the particular content deposited on the chosen mirror content server by the chosen access path.

8. The method (400) according to claim 7, further comprising the steps of:
- determining the equipment items of the network federation eligible as content servers of the plurality of content servers of the content dissemination system;
and choosing a mirror content server from the plurality of content servers consists in:
- identifying the content servers that make up candidate mirror content servers for the particular content; and
- determining, among the candidate mirror content servers, the mirror content server able to receive a copy of the particular content.

9. The method according to claim 7 or claim 8, further including a step consisting in defining access rules to the copy of the particular content deposited on the chosen mirror content server for the user.

10. The method according to any one of claims 7 to 9, further including a step consisting in calculating an access path to the copy of the particular content deposited on the chosen mirror content server for the user.

11. A computer program product including software instructions which, when they are executed by a master orchestration system of a content dissemination system according to any one of claims 1 to 6, makes it possible to implement certain steps of a method for disseminating content according to any one of claims 7 to 10.
